# EUROPÄISCHE PATENTSCHRIFT

(11) **EP 2 209 717 B1**
(45) Veröffentlichungstag und Bekanntmachung des Hinweises auf die Patenterteilung: **13.02.2013**
(21) Anmeldenummer: 09778353.4
(22) Anmeldetag: 04.09.2009
(51) Int. Cl.: B65B 9/04, B65B 59/02, B65G 21/14, B65G 23/44

(54) **VERPACKUNGSMASCHINE MIT DYNAMISCHER KETTENSPANNUNG**
PACKAGING MACHINE WITH DYNAMIC CHAIN TENSION
MACHINE D'EMBALLAGE A TENSION DE CHAINE DYNAMIQUE

(30) Priorität: 11.09.2008 DE 102008046902
(43) Veröffentlichungstag der Anmeldung: 28.07.2010
(73) Patentinhaber: Multivac Sepp Haggenmüller GmbH & Co. KG, 87787 Wolfertschwenden (DE)
(72) Erfinder: EHRMANN, Elmar, 87730 Bad Grönenbach (DE); RUZIC, Ivo, 87437 Kempten (DE)
(74) Vertreter: Grünecker, Kinkeldey, Stockmair & Schwanhäusser
(86) Internationale Anmeldenummer: PCT/EP2009/006456
(87) Internationale Veröffentlichungsnummer: WO 2010/028783

(56) Entgegenhaltungen:
- EP-A- 1 564 165
- DE-A1- 3 502 664
- DE-A1- 10 152 891
- DE-A1- 19 741 838
- DE-A1- 19 904 146
- GB-A- 2 034 655
- US-A- 5 641 058

## Beschreibung

Die vorliegende Erfindung betrifft eine Verpackungsmaschine und ein Verfahren zu deren Betrieb nach den Oberbegriffen der Ansprüche 1 und 15.

### Stand der Technik

Die DE 10 2006 006 185 A1 beschreibt eine Verpackungsmaschine mit Transportmitteln, die eine Folienbahn taktweise um eine gewisse Vorschublänge in einer Transportrichtung transportieren und bei der die Vorschublänge in Abhängigkeit der Längung des Transportmittels veränderbar ist. Solche Verpackungsmaschinen können beispielsweise Form-, Füll-, Siegel- und Vereinzelungsstationen umfassen. Da solche Maschinen oft eine Länge von 10 m bis 20 m und mehr aufweisen, spielt die Längung der Transportmittel, welche üblicherweise als Transportketten ausgebildet sind, eine zunehmende Rolle bei der exakten Führung der Folienbahn durch die Verpackungsmaschine.

Bei einer Längung der beiden die Verpackungsfolie an ihren äußeren Rändern fixierenden und führenden Ketten tritt ein Versatz der in der Folie geformten Verpackungsbehältnisse in Transportrichtung auf, der den ordnungsgemäßen Verpackungsablauf soweit stören kann, dass die betreffende Verpackung den entsprechenden Qualitätsanforderungen nicht mehr entspricht und ausgesondert werden muss.

Um solchen Ausfällen vorzubeugen, schlägt diese Schrift daher vor, die Längung des Transportmittels zu messen und darauf basierend dessen Vorschublänge anzupassen.

Das gleiche Thema liegt der DE 101 52 891 Oberbegriff der Ansprüche 1 und 15 zugrunde, die als Reaktion auf eine Änderung der Kettenlänge eine Veränderung des Transportschrittes der Transporteinrichtung oder eine Veränderung des Abstandes zwischen einer Formstation und einer Stanzstation vorschlägt. Die Zugspannung der Transportkette wird hierbei über den ganzen Hub konstant gehalten. Die relative Lage eines die Transportkette spannenden Kettenspanners wird mittels eines Sensors erfasst und an eine Steuerung weitergeleitet, so dass diese eine z. B. temperaturbedingte Längenänderung der Kette und/oder eine Veränderung in der Zugkraft der Transportkette detektieren kann. Diese Kettenzustandserfassung hängt somit von zwei Parametern ab. Einmal von der Änderung der Kettenlänge und das andere Mal von der auf den Kettenspanner aufgeprägten Vorspannkraft. Welcher Parameter sich geändert hat kann die Kontrolleinheit hierdurch jedoch nicht feststellen.

Die DE 10 2005 044 537 B3 thematisiert eine Veränderung in der Länge der Transportketten für Thermoformmaschinen. In dieser Schrift wird vorgeschlagen, während des Transportschrittes der Folie eine reduzierte Spannkraft auf die Transportketten aufzubringen um den Reibungswiderstand und den Verschleiß der Kette herabzusetzen. Im Stillstand soll eine Spannkrafterhöhung erfolgen, so dass immer eine gleiche reproduzierbare Kraft in den beiden Transportketten herrscht und damit über ein Wegmesssystem vergleichbare Werte und damit eine Längenänderung der Transportketten gemessen werden kann.

### Aufgabe und Vorteile

Der vorliegenden Erfindung liegt die Aufgabe zugrunde, in einer Verpackungsmaschine entsprechend des einleitend dargelegten Standes der Technik die Präzision der Führung einer Materialbahn zu verbessern.

Die Lösung dieser Aufgabe erfolgt, ausgehend vom Oberbegriff der Ansprüche 1 und 15, durch deren kennzeichnenden Merkmale. In den Unteransprüchen sind zweckmäßige und vorteilhafte Weiterbildungen angegeben.

Dementsprechend zeichnet sich eine erfindungsgemäße Verpackungsmaschine dadurch aus, dass Sensormittel zur Erfassung der Kettenlänge, der Kettenteilung und/oder der Kettenspannung der Transportketten vorgesehen ist, wobei Mittel zum Recken und/oder Entspannen wenigstens einer einzelnen Transportkette und Kontrollmittel vorgesehen sind, um eine unterschiedliche Länge oder Kettenteilung zweier Transportketten durch kontrolliertes Recken und/oder Entspannen wenigstens einer Transportkette aneinander anzugleichen.

Auf diese Weise ist es möglich, einen etwaigen Versatz einer Transportbahn, beispielsweise einer Folie zwischen den beiden Transportketten, der durch unterschiedliche Längen der Transportketten zustande kommen kann, zu vermindern oder ganz zu unterbinden. Durch das unmittelbare Angleichen der Kettenlängen, wird die Größe beeinflusst, die unmittelbar die Synchronität beider Transportketten betrifft. Somit ist durch die Angleichung der Kettenlänge ein deutlich verbesserter Betrieb möglich.

Die Kettenteilung bildet den Quotienten zwischen der Anzahl der Kettenglieder und der Länge der Kette, so dass bei konstanter Gliederanzahl die Kettenteilung unmittelbar von der Kettenlänge abhängt.

Durch eine kontinuierliche Erfassung der Länge, der Teilung oder der Spannung der Transportketten ist in einer vorteilhaften Weiterbildung der Erfindung eine Messdatenerfassung über die gesamte Transportkette möglich. Insbesondere kann dabei die Erfassung der Kettenlänge, Kettenteilung und/oder Kettenspannung auch während des Betriebs vorgenommen werden, so dass auf Änderungen dieser Größen unmittelbar reagiert werden kann. Die Kettenlänge, Kettenteilung und/oder Kettenspannung kann beispielsweise während des Betriebs Veränderungen unterworfen sein, indem sich die Kette dehnt. Durch die kontinuierliche Erfassung der Länge, Teilung und/oder Spannung der Transportketten insbesondere während des Betriebs ist eine solche Ausführungsform der Erfindung in der Lage, unmittelbar ohne Unterbrechung des Maschinenbetriebs durch Recken und/oder Entspannen wenigstens einer Kette die Kettenlänge bzw. Kettenteilung beider Transportketten einander anzugleichen.

In einer besonderen Ausführungsform der Erfindung umfassen die Sensormittel eine Vorspannrolle zur Erfassung der Kettenlänge, Kettenteilung und/oder Kettenspannung. Eine Vorspannrolle, die unter Vorspannung beispielsweise Federdruck in den Umlauf einer Transportkette eingebaut ist, kann durch Veränderung ihrer Position ein Maß über die Kettenlänge und somit auch die Kettenteilung sowie aufgrund der Vorspannung die in einer bestimmten Position der Vorspannrolle an dieser anliegt, auch ein Maß über die Spannung der Kette liefern.

Die Vorspannung kann beispielsweise über eine Feder bewirkt werden. Zur Vorspannung der Feder kann beispielsweise ein Spindelmotor und eine damit angetriebene Spindel dienen. Mittels einer solchen Einrichtung ist eine einfache Änderung der Zugspannung durch eine entsprechende Positionierung der Spindel in Bezug auf das Federelement möglich. Bei gewünschter Veränderung der Länge, Teilung und/oder Spannung Zugkraft in der Transportkette wird die Spindel so gedreht, dass die Spannfeder komprimiert und damit zur stärkeren Krafteinleitung in die Kette vorgespannt wird. Bei gewünschter Erniedrigung der Kettenspannung wird dieser Vorgang durch die Kontrolleinheit vorgegeben und über den Sensor kontrolliert in umgekehrter Wirkungsrichtung durchgeführt.

In einer Weiterbildung der Erfindung wird das Angleichen der Kettenlänge oder Kettenteilung nur innerhalb eines vorgegebenen Intervalls der Kettenspannung vorgenommen. Dem liegt zugrunde, dass der Erhöhung oder Verringerung der Kettenspannung beim Recken oder Entspannen der Kette für einen sicheren Betrieb Grenzen zu setzen sind. Einerseits bedarf ein sicherer Betrieb der Maschine eine Mindestspannung der Transportketten, zum anderen sollten die Transportketten auch nur einer Maximalspannung ausgesetzt werden.

Die Kontrolleinheit kann beispielsweise auch ein Warnsignal erzeugen, sofern der gewünschte Angleich der Kettenlänge oder Kettenteilung innerhalb des vorgegebenen Kettenspannungsintervalls nicht möglich ist. Im Falle einer solchen Anzeige kann eine entsprechende Wartung, z.B. der Austausch der Transportketten abhängig von einem solchen Ereignis vorgenommen werden.

Bevorzugt umfassen die Kontrollmittel eine dynamische Regelung, um die Länge oder Teilung von Teilbereichen der Transportketten anzugleichen, die im Betrieb eine bestimmte Position durchlaufen. Dieser Ausführungsform liegt der Gedanke zugrunde, dass für den Betrieb der Verpackungsmaschine letztlich das Obertrum im Bereich der Bearbeitungsstationen von maßgeblicher Bedeutung ist. Grundsätzlich kann eine Kette in unterschiedlichen Teilbereichen eine unterschiedliche Kettenteilung aufweisen. Für den Gleichlauf beider Transportketten ist jedoch von wesentlicher Bedeutung, dass diese im Bereich der Arbeitsstationen gleichlaufen, so dass eine weitere Verbesserung einer erfindungsgemäßen Verpackungsmaschine dadurch möglich ist, dass stets die relevanten Teilbereiche der Transportketten überprüft und ggf. durch Recken oder Entspannung in ihrer Länge oder Kettenteilung angeglichen werden.

Der Ausdruck "dynamische Regelung" bedeutet dabei die fortlaufende Erfassung der Länge oder Teilung der ganzen Transportketten oder von Teilbereichen der Transportkette, die gerade entsprechende Abschnitte der Umlaufbahn durchlaufen, und die stetige Regelung, um diese gemessene Länge oder Teilung einem Sollwert anzugleichen. Eine Kette kann somit in unterschiedlichen Positionen während des Umlaufs unterschiedlich gereckt oder entspannt werden, um den entsprechenden Angleich zu anderen Kette zu bewerkstelligen.

Bevorzugt wird ein Schwellwert für die Kettenlänge und/oder Kettenteilung und Anzeigemittel vorgesehen, um beim Überschreiten des Schwellwerts das Erreichen einer Verschleißgrenze anzuzeigen. Dies bedeutet, dass bei einer Überdehnung einer Kette diese als verschlissen angezeigt wird, so dass ein Austausch erfolgen kann. Ein solcher Schwellwert kann für die gesamte Kettenlänge gelten oder aber auch für eine bestimmte Mindestlänge eines Kettenabschnitts, beispielsweise einer bestimmten Anzahl von Kettengliedern, die unter einem solchen Schwellwert mit ihrer Kettenabschnittslänge oder Kettenteilung liegen muss.

Als Sensormittel kann beispielsweise ein Kraftsensor vorgesehen sein, der die in der Transportkette vorherrschende Zugspannung direkt erfasst und an eine Kontrolleinheit weiterleitet, entweder als analogen Wert, z.B. in der Form einer Spannung, oder aber bereits aufbereitet durch eine ggf. vorhandene zusätzliche Auswerteeinheit, als entsprechender Wert für die gemessene Kraft. Denkbar ist auch ein Wegsensor, der beispielsweise den Weg eines Kraftelementes, wie z.B. eines Stellgliedes erfasst und unter Berücksichtigung eines Umrechnungsfaktors, z.B. einer Federkonstante, hieraus eine Information über die in der Transportkette gemessene Zugspannung an die Kontrolleinheit übermitteln kann.

In einer bevorzugten Ausführungsform kann die Kettenlänge, Kettenteilung und/oder Kettenspannung in der umlaufend angetriebenen Kette zur differenzierten Erfassung auch an mehreren Orten entlang Ihres Verlaufs gemessen werden. Hierdurch kann ggf. in einzelnen Kettenabschnitten mit unterschiedlichen Maßnahmen reagiert werden.

In einer möglichen Ausführungsform kann die Kontrolleinheit zur Beeinflussung der Kettenlänge, Kettenteilung und/oder Kettenspannung einen Sollwert in Abhängigkeit des Istwertes in der selben Transportkette und/oder einer weiteren Transportkette vorgeben. Die Kontrolleinheit kann einen Sollwert für die Kettenlänge, Kettenführung und/oder Kettenspannung in der Transportkette in Abhängigkeit der Kettenleitung wenigstens eines Kettenglieds der selben Transportkette und/oder einer weiteren Transportkette vorgeben. Bei der Berücksichtigung der aktuell in der betreffenden Transportkette vorherrschenden Werte kann es sich beispielsweise um eine Ausregelung eines nicht ausreichend genau eingestellten Wertes für der Kette handeln. Es kann sich aber auch um eine Erhöhung oder Erniedrigung der Kettenlänge, Kettenteilung und/oder Kettenspannung gegenüber dem vorherrschenden Istwert handeln, um beispielsweise eine gleichmäßigere Längung der einzelnen Kettenglieder in der Transportkette zu erreichen. Durch den Ausgleich der Kettenlängen durch Spannen bzw. Recken und/oder Entspannen wird ein Ausgleich für einen eventuell auftretenden Transportversatz zwischen dem einen Randbereich und dem anderen Randbereich der zu transportierenden Folie zu erreicht.

In einer weiteren bevorzugten Ausführungsform können auch Messmittel zur Bestimmung der Länge eines einzelnen Gliedes und/oder mehrerer Glieder der Transportkette vorgesehen sein.

Einer solchen Vorgehensweise liegt die Erkenntnis zugrunde, dass die Kette sich nicht nur insgesamt längt, sondern zumindest einzelne Kettenglieder sich gegenüber anderen Kettengliedern unterschiedlich in ihrer Länge während des Betriebs der Verpackungsmaschine verändern. Hieraus ergeben sich unterschiedliche Folienführungsvektoren beim Transport der Folie durch die Verpackungsmaschine aufgrund eines oder gegebenenfalls mehrerer im Vergleich zu den übrigen Kettengliedern stärker, schwächer oder gegebenenfalls auch noch nicht gelängter Kettenglieder entlang der Folienführung.

Durch solche unterschiedlichen Kettenlängen können in weiter nachteilhafter Weise auch quer in der Folienbahn verlaufende Zugkräfte auftreten, die zum Beispiel eine Tendenz zur Faltenbildung in der Folie verursachen können. Die Konturen von in der Folie ausgebildeten Verpackungsbehältnissen können sich dadurch nach Entspannung der Folie verziehen, so dass deren ursprünglich vorgesehenen Geometrien nicht mehr eingehalten werden.

Ursächlich für solche unterschiedlichen Gliederlängungen können beispielsweise ruckartige Belastungen in der Transportkette sein, oder auch nur in einem Teilabschnitt einer solchen, bei denen die zwischen zwei Eingriffspunkten in die Kette befindlichen Glieder zum Teil massiv und bleibend gestreckt werden können. Demgegenüber können aber insbesondere Kettenglieder, die sich gerade in einer Führung, wie zum Beispiel in einem Zahnrad befinden, nicht von einer solchen ruckartigen Belastung beaufschlagt und demnach auch nicht entsprechend gedehnt werden.

Gegebenenfalls einer geringeren Belastung können dem gegenüber Kettenglieder ausgesetzt sein, die sich in einem Bereich der Transportkette befinden, in welchem beispielsweise ein Kettenspanner vorgesehen ist, der zum Beispiel für einen bestimmten elastischen Ausgleich im Kettenzug sorgt und damit einer Überbeanspruchung der betreffenden Kettenglieder in diesen Bereich entgegenwirken kann. Diese Kettenglieder werden im Idealfall ebenfalls nicht gelängt, zumindest aber nicht so stark wie jene Kettenglieder in deren Reihe die schlagartige Belastung aufgetreten ist. Insgesamt lässt sich auf Dauer eine unterschiedliche Gliederlängung und damit eine,unregelmäßige Folienführung nicht vermeiden. Um dem dadurch verursachten Folienverzug entgegenzuwirken, sollen solche Längungen der Kette, die insbesondere in bestimmten Teilabschnitten sehr unregelmäßig sein können, wenigstens teilweise ausgeglichen werden.

Um eine besonders exakte Erfassung der Länge eines einzelnen Kettengliedes und/oder mehrerer Kettenglieder zu ermöglichen, kann in einer bevorzugten Ausführungsform ein Längenmessmittel in einem Laufbereich der Transportkette vorgesehen sein, in dem die Transportkette unter Zugspannung steht. Dadurch kann das Kettenglied bei in seiner vollen Länge erstreckten Ausdehnung gemessen werden. Gleiches gilt für die Messung mehrerer Kettenglieder, wobei hierfür sowohl eine Messung jedes einzelnen Kettengliedes vorgesehen sein kann, als auch die Messung in vorgebbaren Intervallen, wie zum Beispiel jedes zweite, jedes fünfte, jedes zehnte Glied oder dergleichen mehr.

Die exakteste Erfassung der Längenänderung der Transportkette wird aber durch die Erfassung jedes einzelnen Kettengliedes erreicht. Hierauf aufbauend kann eine Kontrolleinheit mit entsprechenden Daten versorgt eine entsprechende Optimierung des Folientransports durch die Verpackungsmaschine hindurch bewirken.

Als Kontrolleinheit wird im Sinne der vorliegenden Erfindung eine Einheit verstanden, die sowohl Funktionalitäten einer Regelung als auch Funktionalitäten einer Steuerung enthalten kann, und zwar sowohl für einzelne Elemente der Verpackungsmaschine als auch für mehrere, insbesondere bevorzugt für alle zu kontrollierenden Elemente der Verpackungsmaschine. Beispielsweise kann hierzu ein Mikroprozessor vorgesehen sein, insbesondere bevorzugt mit entsprechenden peripheren Komponenten.

Die Messmittel können in bevorzugter Weise einen Sensor umfassen, der die Länge des betreffenden Gliedes und/oder der betreffenden Glieder indirekt oder direkt erfasst und ein entsprechendes Signal an die Kontrolleinheit weiter gibt. Bei einer direkten Erfassung kann der Sensor so ausgebildet sein, dass er selbständig zur Erfassung der Länge und Weitergabe eines entsprechenden Wertes an die Kontrolleinheit geeignet ist. Bei einer indirekten Erfassung kann der Sensor beispielsweise ein Signal an die Kontrolleinheit liefern, welches dieser das Vorhandensein des zu prüfenden Teiles des Kettengliedes anzeigt, so dass die Kontrolleinheit in Kombination mit der Fördergeschwindigkeit der Transportkette die Länge des zu messenden Kettengliedes bestimmen kann. Als Sensoren kommen hier beispielsweise optische, induktive, kapazitive Sensoren in Frage.

In einer insbesondere bevorzugten Ausführungsform kann auch eine Kennzeichnung eines bestimmten Kettengliedes vorgesehen sein. Weiterhin kann eine Kontrolleinheit vorgesehen sein, die zumindest zur Verfolgung der Position eines Kettenglieds ausgebildet ist. Mittels dieser Kennzeichnung kann über eine entsprechend vorgesehene Kontrolleinheit eine genaue Verfolgung der Position dieses Kettengliedes im Umlauf der Transportkette realisiert und entsprechende Maßnahmen zur Kompensation unterschiedlicher Längungen von Kettengliedern eingeleitet werden. Je mehr Kettenglieder gekennzeichnet sind und im Umlauf verfolgt werden, desto genauer kann eine entsprechende Kontrolle des Folienvorschubs realisiert werden.

Insbesondere kann hierzu die Kontrolleinheit zumindest einen Antrieb und/oder ein Spannmittel der Transportkette entsprechend überwachen, so dass unter Berücksichtigung einer erfassten Längenänderung eines Kettengliedes zum Längenausgleich während des Betriebes auch eine Reduzierung oder Erhöhung in der Antriebsgeschwindigkeit des betreffenden Kettenantriebs vorgesehen werden kann. Insbesondere vorteilhaft kann hierbei zugleich auch die Kettenlänge und/oder Kettenspannung beeinflusst werden.

Für die Aufrechterhaltung einer bestimmten Kettenspannung_{.}kann ein Kettenspannmittel vorgesehen sein. Dieses kann beispielsweise eine Umlenkrolle umfassen, deren Achse mittels eines Stellelementes, zum Beispiel in der Form eines Zylinders, einer Feder oder dergleichen, so variierbar ist, dass hierdurch die Zugspannung in der Kette beeinflusst werden kann. Die Variierung über ein aktives Stellglied, wie zum Beispiel einen Zylinder, hat den Vorteil, dass die Zugspannung in der Kette nach entsprechenden Vorgaben nachgeführt werden kann. Die Erfassung der Zugspannung in der Transportkette kann beispielsweise über einen Wegsensor, über einen Kraftsensor oder dergleichen mehr erfasst werden. Auch hierzu sind sowohl optische, induktive als auch kapazitive Sensoren für die Erfassung eines Weges aufgrund einer Positionsänderung des Kettenspanners gut geeignet.

Die Zugkrafterfassung mittels eines Kraftsensors kann beispielsweise auf der Basis eines Druck- und/oder Zugsensors erfassen.

Bezüglich der Zugspannung in der Transportkette kann in einer ersten Ausführungsform ein Spannmittel so angeordnet sein, dass die Transportkette hiervon in seiner gesamten Länge gespannt werden kann. Dies ist zum Beispiel möglich, wenn ein angetriebenes Element, zum Beispiel ein Kettenrad entlang der Führung der Transportkette vorgesehen ist und alle anderen Führungselemente als passive Elemente ausgebildet sind, also ohne weiteren Antrieb. Über den Kettenspanner vorgespannt, kann die Transportkette in dem Bereich, in dem sie die Folie transportiert, durch entsprechende Änderung der Vortriebsgeschwindigkeit, wie bereits oben angeführt, unterschiedliche Längungen einzelner Kettenglieder berücksichtigen, um so eine möglichst gleichmäßige Transportgeschwindigkeit für die Folienbahn zu erzielen. Aber auch eine genauere Positionierung der Folie und somit der darin auszuformenden, zu befüllenden, zu versiegelnden und zu vereinzelnden Verpackungsbehältnisse kann hierdurch erreicht werden.

Entsprechend des Transportfortschrittes stärker oder schwächer gereckter Kettenglieder kann deren damit verbundene Transportleistung für die Folie über den gesamten Transportweg hin im Vergleich zu benachbarten Kettenbereichen mit hiervon verschieden gereckten Kettengliedern neben einem Längenausgleich auch durch Änderung der Transportgeschwindigkeit so angepasst werden, dass ein überwiegend gleichmäßiger Transport durch die Verpackungsmaschine für die Folienbahn möglich ist.

In vorteilhafter Weise kann hierzu wenigstens ein zusätzlicher.Antrieb für wenigstens eine Transportkette vorgesehen sein. Besonders vorteilhaft können sogar mehrere zusätzliche Antriebe für eine Transportkette entlang ihres Verlaufs, insbesondere entlang des Förderverlaufs für die Folie angeordnet und insbesondere bevorzugt jeweils separat angesteuert werden, um die oben beschriebenen Vorzüge der Verpackungsmaschine zu erreichen.

Beispielsweise kann damit auch schräg durch die Folie verlaufenden Querspannungen so entgegengewirkt werden, dass in den betreffenden Bereich bis zu deren Eliminierung eine relative Differenzgeschwindigkeit auf die Förderketten aufgeprägt wird. Nach dem Ausgleich des Folienverzugs können die beiden Ketten in diesem Bereich so angetrieben werden, dass sie in diesem Bereich eine durchgehend gleiche Folientransportgeschwindigkeit bewirken.

Insbesondere vorteilhaft ist eine solche gleichmäßige Folientransportgeschwindigkeit mit möglichst geringem Folienverzug in jenen Bereichen vorzusehen, in welchen die Folie zum Beispiel durch eine Arbeitsstation, zum Beispiel wie eine Vorwärmstation, eine Tiefziehstation, eine Befüllstation, eine Versiegelungsstation und/oder eine Vereinzelungsstation bearbeitet wird. Gegebenenfalls kann es hierbei von Vorteil sein, wenn zwischen solchen Bereichen, in denen eine möglichst optimale Folienführung vorzusehen ist, sogenannte Pufferbereiche realisiert werden, in denen nötigenfalls ganz gezielt eine Verspannung der Folie zugelassen wird, um die Folie hierdurch in den oben beschriebenen Bearbeitungsbereichen möglichst entspannt gleichmäßig transportieren zu können.

Neben dem Vorsehen mehrerer Antriebe für jeweils eine Kette entlang deren Führung kann zusätzlich ein Mindestwert und/oder ein Höchstwert für die Zugspannung in der jeweiligen Transportkette vorgesehen sein. Während des Betriebs der Verpackungsmaschine können die Ketten innerhalb dieses Zugspannungsbereichs betrieben werden, wobei in besonders bevorzugter Weise jeweils die in einer wenigstens weiteren Kette vorherrschende Zugspannung mit berücksichtigt wird. Beispielsweise könnte so durch Erhöhung der Zugspannung in einer Kette einem Verzug in der Folienbahn zumindest ein Stück weit entgegengewirkt werden. Bei stetiger Erhöhung der Zugspannung würde diese Kette irgendwann ihren Maximalwert erreichen, so dass bei weiterer Zugspannungserhöhung deren Maximalwert überschritten werden würde. Für diesen Fall kann eine Verringerung der Zugspannung in der zweiten Kette vorgesehen werden, um zumindest in einem bestimmten Folientransportabschnitt den gleichen Entspannungseffekt zu bewirken. Der gleiche Sachverhalt gilt sinngemäß in Richtung Verringerung der Zugspannung und damit der Verringerung der Kettenlänge, so dass auch diesbezüglich jeweils die Länge und/oder Spannung der anderen Kette bei der Festlegung der Länge der einen Kette berücksichtigt wird. Insbesondere vorteilhaft kann es sein, wenn die Zugspannung in beiden Ketten in etwa im mittleren Bereich zwischen deren minimalem und maximalem Wert herumpendelt, so dass jeweils in beide Richtungen ein etwa gleich großer Ausgleichsbeitrag in der Kettenlänge und/oder Kettenspannung zur Verbesserung der Folienführung zur Verfügung gestellt werden kann.

In einer weiter bevorzugten Ausführungsform kann die Kontrolleinheit so ausgebildet sein, dass sie die tatsächliche Position eines einzelnen Kettengliedes und/oder mehrerer Kettenglieder in Bezug auf die Soll-Position, die das jeweilige Kettenglied ohne eine ermittelte Längenänderung für ein und/mehrere Kettenglieder im betreffenden Laufbereich der Transportkette einnehmen sollte, anpassen kann. Dies kann insbesondere durch die oben bereits beschriebenen Einflussnahmen hinsichtlich der Kettenfördergeschwindigkeit und/oder der Kettenlänge und/oder Spannung/Zugspannung in der Kette erreicht werden.

In einem zweiten Aspekt betrifft die vorliegende Erfindung ein Verfahren zum Betrieb einer Verpackungsmaschine entsprechend der oben beschriebenen Ausführungsformen.

### Ausführungsbeispiel

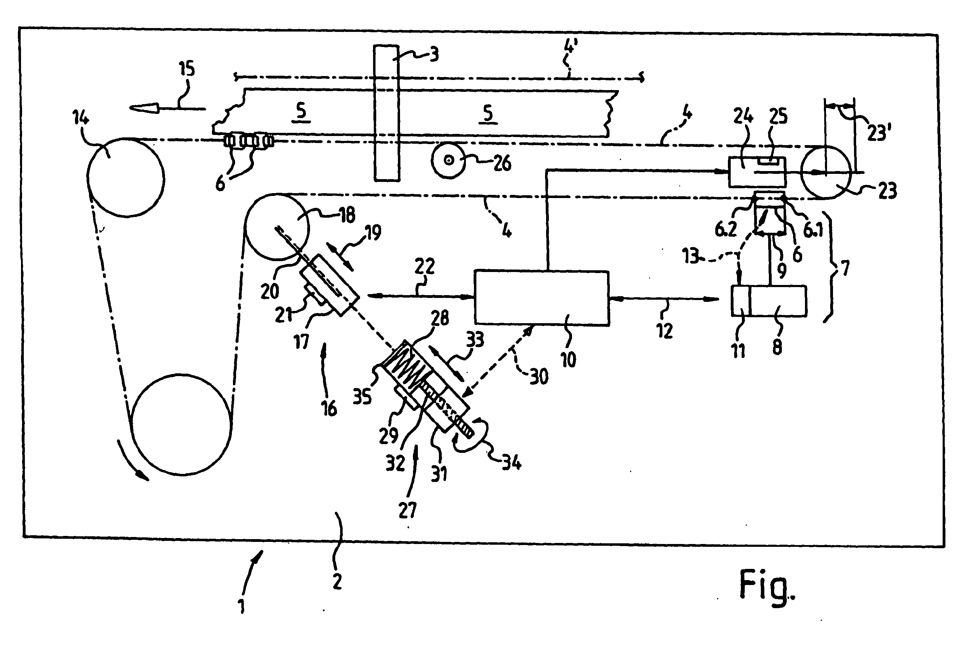

Nachfolgend wird anhand der beigefügten Figur eine mögliche Ausführungsform der Erfindung beispielhaft näher beschrieben.

Dementsprechend zeigt die einzige Figur beispielhaft und schematisch eine Verpackungsmaschine 1 mit einem Rahmen 2 und einer beispielhaft dargestellten Arbeitsstation 3, stellvertretend für gegebenenfalls mehrere vorgesehene Arbeitsstationen, sowie zwei Transportketten 4, 4' zum Transport einer Materialbahn 5 durch die Verpackungsmaschine 1 hindurch. Rein beispielhaft sind zwei Kettenglieder 6 an der Transportkette 4 dargestellt, die zur Erfassung, Fixierung und den Transport der Folie durch die Verpackungsmaschine hin dienen.

Zur Bestimmung der Länge eines solchen Gliedes der Transportkette sind Messmittel 7 in einem Laufbereich der Transportkette vorgesehen, in dem diese unter Zugspannung steht. Durch die Aufbringung einer ausreichenden Zugspannung auf die Transportkette 4 werden deren Glieder in den betreffenden Kettenabschnitt auf ihre volle Längserstreckung auseinandergezogen, so dass diese erfassbar ist. Die Transportkette 4' ist rein symbolisch nur als kurzer Abschnitt dargestellt, grundsätzlich gelten für sie jedoch die gleichen Merkmale wie für die Kette 4.

Als beispielhaftes Messmittel zur Bestimmung der Längserstreckung der Kettenglieder ist hier ein Sensor 8 dargestellt. Dieser erfasst die Länge 9 zwischen den beiden den Anfang und das Ende eines Kettengliedes 6 symbolisierenden Punkten 6.1 und 6.2 und übermittelt sie, wie ebenfalls beispielhaft entsprechend des Pfeils 12 gezeigt, an eine Kontrolleinheit 10.

Eine an dem Kettenglied 6 vorgesehene Kennzeichnung, hier als Ziffer 1 symbolisch dargestellt, kann von einem Erfassungsmittel 11 erfasst werden, wie symbolisch durch den gestrichelten Pfeil 13 dargestellt, und ebenfalls der Kontrolleinheit bekannt gegeben werden, so dass diese unter Berücksichtigung des Vorschubs der Transportkette jeweils den genauen Ort des Kettengliedes kennt und dessen hierzu durch den Sensor 8 erfasste Längenausdehnung.

Basierend auf dieser Längenausdehnung kann die Kontrolleinheit 10 eine entsprechende Einflussnahme auf die Kettenlänge, Kettenteilung und/oder Kettenspannung und/oder die Fördergeschwindigkeit der betreffenden Transportkette und/oder der anderen Transportkette und damit auf die Fördergeschwindigkeit der von den Transportketten zu fördernden Folienbahn 5 nehmen. Hierdurch kann einem Verzug in der Folienbahn aufgrund unterschiedlicher Fördergeschwindigkeiten, bedingt durch unterschiedliche Längsausdehnungen einzelner Kettenglieder, entgegengewirkt werden.

Die Kontrolleinheit 10 kann hierzu die Geschwindigkeit des Antriebs 14 variieren, so dass die von ihm angetriebene Transportkette 4 die Folienbahn 5 in einer überwiegend gleichmäßigen Förderbewegung durch die Verpackungsmaschine 1 hindurch entsprechend der Pfeilrichtung 15 transportieren kann.

Um der Transportkette 4 eine Kettenspannung und damit die zugehörige Kettenlänge aufprägen zu können, so dass diese zuverlässig und sicher über ihre Führungselemente geführt werden kann, ist wiederum beispielhaft ein Kettenspanner 16 dargestellt, der mittels eines Zylinders 17 eine Umlenkrolle 18 zur Einstellung der in der Transportkette vorherrschenden Zugspannung dient. Die Variierung in der Bewegung des Zylinders bzw. symbolisch entsprechend die Variierung der Zugspannung in der Förderkette 4 ist durch den Pfeil 19 dargestellt. Dieser symbolisiert gleichzeitig aber auch die Variierung einer Wegstrecke bei einer Veränderung der Kolbenkraft durch Verschiebung der Kolbenstange 20. Zur Erfassung der Kettenspannung ist nun wieder beispielhaft ein Sensor 21 dargestellt, der im Falle einer Ermittlung der Zugspannung über einen Druck oder einen Zug als Kraftsensor ausgebildet ist, so dass direkt über die gemessene Kraft die Spannung in der Kette übermittelt werden kann. Denkbar ist aber auch eine Erfassung eines Weges mit der Kolbenstange 20, so dass gegebenenfalls mit Berücksichtigung einen durch eine entsprechende Druckbeaufschlagung des Zylinders bekannte Kraft zur Vorspannung der Kette genutzt werden kann und über den Wegsensor eine Längendehnung der Kette erfasst werden kann. Eine Anbindung an die Kontrolleinheit 10 ist hier wiederum beispielhaft mittels des Pfeils 22 symbolisch dargestellt.

Eine andere Möglichkeit, Die Kette zu recken und/oder zuspannen wird, wiederum beispielhaft, durch einen auf eine Umlenkrolle 23 wirkenden Kettenspanner 24 dargestellt. Sinngemäß gelten hier die gleichen Möglichkeiten zur Aufprägung einer Zugspannung sowie zu deren Erfassung und zur Erfassung der Länge der Transportkette, wie bereits zum Kettenspanner 16 beschrieben. Zum Sensor 21 entsprechend ist hier beispielhaft der Sensor 25 dargestellt und für die Relativbewegung entsprechend des Pfeils 19 hier der Pfeil 23'.

Um einzelne Teilbereiche entlang der Förderstrecke der Transportkette mit unterschiedlichen Geschwindigkeiten und/oder Zugspannungen beaufschlagen zu können, kann weiter vorteilhaft mindestens ein zusätzlicher Antrieb 26 für die Transportkette 4 vorgesehen sein, so dass in diesem Beispiel die Strecke zwischen den beiden Umlenkrollen 14 und 23 an der Eingriffstelle der Transportrolle 26 geteilt wird. Durch diese Teilung kann sowohl hinsichtlich der Zugspannung in der Förderkette als auch hinsichtlich deren Förderbewegung der vor bzw. nach dem Antrieb 26 liegende Kettenbereich separat beeinflusst werden. Hierdurch kann ein relatives Vorwandern bzw. Nachwandern der Folie aufgrund von im Verhältnis zu den übrigen Kettengliedern länger bzw. kürzer gestreckten Kettengliedern reduziert und einer so bedingten Faltenbildung in der Folie entgegengewirkt werden.

Alternative Mittel zur Beaufschlagung der Transportkette 4 oder 4' mit einer Zugspannung sind, wieder beispielhaft, in axialer Verlängerung zum Kettenspanner 16 mit einer gestrichelten Linie symbolisch mit der Umlenkrolle 18 verbunden in Form eines weiteren Stellmittels 27 dargestellt. Diese Stellmittel 27 umfassen ein Federelement 28 mit einer definierten Federkonstanten, so dass entsprechend des Kompressionsweges dieses Federelementes ein Druck auf die damit mechanisch verbundene Umlenkrolle 18 und damit auf die Transportkette 4 bzw. 4' aufgeprägt werden kann. Mittels des Sensors 29 kann der betreffende Federweg erfasst und über die ebenfalls nur beispielhaft und symbolisch dargestellte Verbindung 30 der Kontrolleinheit 10 zur Verfügung gestellt werden. Dies kann entweder als analoger Wert oder, direkt mit einer Einheit aufbereitet, als Weg- oder Kraftwert erfolgen.

Alternativ oder zusätzlich wäre auch eine Erfassung und Übermittlung der Spannkraft in der Kette durch einen ebenfalls beispielhaft dargestellten Drucksensor 35 möglich.

Zur Einstellung der Federvorspannung und damit der auf die Transportkette 4, 4' wirkenden Zugspannung ist hier beispielhaft ein Spindelmotor 31 und eine durch diesen entsprechend der Richtungen des Pfeiles 33 bewegbare Spindel 32 vorgesehen. Je nach Drehrichtung des Pfeiles 34 wird die Spindel hin zur Umlenkrolle 18 gedreht und erhöht somit die Komprimierung des Federelementes 28 und dadurch, gleichzeitig durch den Sensor 29 und/oder 35 kontrollierbar, die Zugspannung in der betreffenden Transportkette 4 bzw. 4'. Zur Reduzierung der Zugspannung ist der Spindelmotor in entsprechend gegengesetzter Richtung anzutreiben, so dass die Spindel das Federelement entastet, dieses entspannt wird und die Zugspannung in der Transportkette reduziert werden kann.

Da für die beispielhaft nur ausschnittsweise dargestellte zweite Förderkette 4' grundsätzlich die gleichen Möglichkeiten einer Beeinflussung vorgesehen sind, können auch unterschiedliche Streckungen in den Kettengliedern zwischen der Kette 4 und der Kette 4' dahingehend berücksichtigt werden, dass je nach detektierter Streckung eines oder mehrerer Kettenglieder die betreffende Transportkette in diesem Förderbereich langsamer bewegt wird, bzw. deren Zugspannung heruntergesetzt wird und/oder die zweite Kette gegebenenfalls schneller bewegt wird oder deren Zugspannung erhöht wird, oder umgekehrt, um einen Verzug der Folie zwischen diesen beiden Abschnitten der beiden Transportketten zu reduzieren oder sogar ganz zu verhindern. In besonders bevorzugter Weise wird hierfür jeweils für die Aufprägung einer Zugspannung in der Kette ein maximaler bzw. minimaler Wert für die jeweilige Kette berücksichtigt. Zusätzlich vorteilhaft wird auch die Zugspannung in der jeweils anderen Transportkette berücksichtigt, wobei in besonders bevorzugter Weise in beiden Ketten etwa ein Mittelwert zwischen maximalen Wert und minimalen Zugspannungswert angestrebt wird, um so in beide Richtungen in etwa die gleiche Ausgleichsmöglichkeit zu haben.

### Bezugszeichenliste:

- 1.: Verpackungsmaschine
- 2: Rahmen
- 3: Arbeitsstation
- 4: Transportkette
- 5: Materialbahn/Folie
- 6: Kettenglied
- 7: Messmittel
- 8: Sensor
- 9: Länge
- 10: Kontrolleinheit
- 11: Erfassungsmittel
- 12.: Pfeil
- 13: Pfeil
- 14: Antrieb
- 15: Pfeil
- 16: Kettenspanner
- 17: Zylinder
- 18: Umlenkrolle
- 19: Pfeil
- 20: Kolbenstange
- 21: Sensor
- 22: Pfeil
- 23: Umlenkrolle
- 24: Kettenspanner
- 25: Sensor
- 26: Antrieb
- 27: Stellmittel
- 28: Federelement
- 29: Sensor
- 30: Verbindung
- 31: Spindelmotor
- 32: Spindel
- 33: Pfeil
- 34: Pfeil
- 35: Sensor

## Patentansprüche

1. Verpackungsmaschine (1), insbesondere Tiefziehmaschine, Schalenversiegelungsmaschine, mit wenigstens zwei Transportketten (4, 4') zum Transport einer Materialbahn (5), wie einer Folie oder dergleichen, wobei Sensormittel (8, 21, 25, 35) zur Erfassung der Kettenlänge und/oder der Kettenteilung und/oder der Kettenspannung der Transportketten (4, 4') vorgesehen sind, und wobei Mittel (14, 16, 24, 26, 27) zum Recken und/oder Entspannen wenigstens einer einzelnen Transportkette (4, 4') und Kontrollmittel (10) vorgesehen sind,
**dadurch gekennzeichnet,**
**dass** die Mittel (14, 26, 27) zum Recken und/oder Entspannen und die Kontrollmittel (10) ausgelegt sind um eine unterschiedliche Länge oder Kettenteilung zweier Transportketten (4, 4') durch kontrolliertes Recken und/oder Entspannen wenigstens einer Transportkette (4, 4') einander anzugleichen.

2. Verpackungsmaschine nach Anspruch 1, **dadurch gekennzeichnet, dass** eine kontinuierliche Erfassung der Länge, Teilung und/oder Spannung der Transportketten (4, 4') vorgesehen ist.

3. Verpackungsmaschine nach einem der vorgenannten Ansprüche **dadurch gekennzeichnet, dass** die Erfassung der Kettenlänge (9), Kettenteilung und/oder Kettenspannung während des Betriebs der Transportketten (4, 4') vorgesehen ist.

4. Verpackungsmaschine nach einem der vorgenannten Ansprüchen, **dadurch gekennzeichnet, dass** die Sensormittel (21) eine Vorspannrolle (18) zur Erfassung der Kettenlänge, Kettenteilung und/oder Kettenspannung durch Positionsänderung der Vorspannrolle (18) umfassen.

5. Verpackungsmaschine nach einem der vorgenannten Ansprüchen, **dadurch gekennzeichnet, dass** das Angleichen der Kettenlänge oder Kettenteilung nur innerhalb eines Spannungsintervalls der Transportketten (4, 4') vorgesehen ist.

6. Verpackungsmaschine nach einem der vorangehenden Ansprüche, **dadurch gekennzeichnet, dass** eine Kontrolleinheit (10) zumindest für einen Antrieb (14, 26) und/oder ein Spannmittel (16, 24, 27) der Transportkette (4, 4') vorgesehen ist.

7. Verpackungsmaschine nach Anspruch 6, **dadurch gekennzeichnet, dass** die Transportkette (4, 4') so geführt ist, dass die Spannmittel (16, 24, 27) die Transportkette (4, 4') im Wesentlichen in deren gesamten Länge spannen und/oder recken.

8. Verpackungsmaschine nach Anspruch 6 oder 7, **dadurch gekennzeichnet, dass** die Spannmittel (16, 24, 27) und/oder wenigstens ein Antrieb der Transportkette (4, 4') die Transportkette (4, 4') in einem Teilabschnitt ihres Laufbereichs spannen und/oder recken.

9. Verpackungsmaschine nach einem der vorangehenden Ansprüche, **dadurch gekennzeichnet, dass** ein zusätzlicher Antrieb (26) für die Transportkette (4, 4') vorgesehen ist.

10. Verpackungsmaschine nach einem der vorangehenden Ansprüche, **dadurch gekennzeichnet, dass** ein Mindestwert und/oder ein Höchstwert für die Zugspannung in wenigstens einer Transportkette (4, 4') vorgesehen ist.

11. Verpackungsmaschine nach einem der vorangehenden Ansprüche, **dadurch gekennzeichnet, dass** Mittel zur Erfassung der Zugspannung in der Transportkette (4, 4') einen Kraft- und/oder Wegsensor (21, 25) umfassen.

12. Verpackungsmaschine nach einem der vorangehenden Ansprüche, **dadurch gekennzeichnet, dass** die Kontrolleinheit (10) so ausgebildet ist, dass sie die Spannmittel (27) und/oder wenigstens einen Antrieb (14, 26) der Transportkette (4, 4') so kontrolliert, dass die Transportkette (4, 4') in einzelnen Teilabschnitten ihres Laufbereichs unterschiedlich gespannt und/oder gereckt ist.

13. Verpackungsmaschine nach einem der vorangehenden Ansprüche, **dadurch gekennzeichnet, dass** die Kontrolleinheit (10) dazu ausgelegt ist, die Kettenlänge, Kettenteilung und/oder Kettenspannung in Abhängigkeit einer ermittelten Längenänderung eines einzelnen und/oder mehrerer Kettenglieder (6) zumindest in einem Teilabschnitt des Laufbereichs der Transportkette (4, 4') während des Betriebes anzupassen.

14. Verpackungsmaschine nach einem der vorangehenden Ansprüche, **dadurch gekennzeichnet, dass** die Kontrolleinheit (10) dazu ausgelegt ist, die tatsächliche Position eines einzelnen Kettengliedes (6) und/oder mehrerer Kettenglieder (6) in Bezug auf die Sollposition, die das jeweilige Kettenglied (6) ohne eine ermittelte Längenänderung für ein und/oder mehrere Kettenglieder (6) im betreffenden Laufbereich der Transportkette (4, 4') einnehmen sollte, anzupassen.

15. Verfahren zum Betrieb einer Verpackungsmaschine (1), insbesondere Rollen- oder Tiefziehmaschine, Schalenversiegelungsmaschine oder dergleichen, mit wenigstens zwei Transportketten (4, 4') zum Transport einer Materialbahn (5), wie einer Folie oder dergleichen, und Mittel zur Aufprägung einer von einer Kontrolleinheit (10) vorgebbaren Zugspannung in der Transportkette (4, 4'), wobei die während des Betriebes in den Transportketten (4, 4') vorherrschenden Kettenlänge, Kettenteilung und/oder Kettenspannung durch Sensormittel (8, 21, 25, 35) erfasst wird,
**dadurch gekennzeichnet,**
**dass** unterschiedliche Kettenlängen oder Kettenteilungen zweier Transportketten (4, 4') durch Recken und/oder Entspannen wenigstens einer Transportkette (4, 4') ausgeglichen werden.

## Claims

1. A packaging machine (1), in particular a deep-drawing machine, tray-sealing machine, with at least two transport chains (4,4') for transporting a web of material (5), such as a film or the like, wherein sensor means (8,21,25,35) are provided for detecting the chain length and/or chain pitch and/or chain tension of the transport chains (4,4'), and wherein means (14,16,24,26,27) for stretching and/or relaxing at least one individual transport chain (4,4') and control means (10) are provided,
**characterised in**
**that** the means (14,26,27) for stretching and/or relaxing and the control means (10) are designed to adapt a different length or chain pitch of two transport chains (4,4') to one another by stretching and/or relaxing at least one transport chain (4,4') in a controlled manner.

2. A packaging machine according to Claim 1, **characterised in that** continuous detection of the length, pitch and/or tension of the transport chains (4,4') is provided.

3. A packaging machine according to one of the preceding Claims, **characterised in that** the detection of the chain length (9), chain pitch and/or chain tension is provided during the operation of the transport chains (4,4').

4. A packaging machine according to any one of the preceding Claims, **characterised in that** the sensor means (21) comprise a pretensioning roller (18) for detecting the chain length, chain pitch and/or chain tension by varying the position of the pretensioning roller (18).

5. A packaging machine according to any one of the preceding Claims, **characterised in that** the adaptation of the chain length or chain pitch is provided only within a tensioning interval of the transport chains (4,4').

6. A packaging machine according to any one of the preceding Claims, **characterised in that** a control unit is provided at least for a drive means (14,26) and/or a tensioning means (16,24,27) of the transport chain (4,4').

7. A packaging machine according to Claim 6, **characterised in that** the transport chain (4,4') is guided so that the tensioning means (16,24,27) tension and/or stretch substantially the entire length of the transport chain (4,4').

8. A packaging machine according to Claim 6 or 7, **characterised in that** the tensioning means (16,24,27) and/or at least one drive means of the transport chain (4,4') tension and/or stretch the transport chain (4,4') in a partial section of its running area.

9. A packaging machine according to any one of the preceding Claims, **characterised in that** an additional drive (26) is provided for the transport chain (4,4').

10. A packaging machine according to any one of the preceding Claims, **characterised in that** a minimum value and/or a maximum value is provided for the tension in at least one transport chain (4,4').

11. A packaging machine according to any one of the preceding Claims, **characterised in that** the means for detecting the tension in the transport chain (4,4') comprise a force and/or displacement sensor (21,25).

12. A packaging machine according to any one of the preceding Claims, **characterised in that** the control unit (10) is designed so that it controls the tensioning means (27) and/or at least one drive means (14,26) of the transport chain (4,4') in such a way that the transport chain (4,4') is tensioned and/or stretched to a different extent in individual partial sections of its a running area.

13. A packaging machine according to any one of the preceding Claims, **characterised in that** the control unit (10) is designed to adapt the chain length, chain pitch and/or chain tension depending on a detected change in the length of an individual chain link and/or a plurality of chain links (6) at least in a partial section of the running area of the transport chain (4,4') during operation.

14. A packaging machine according to any one of the preceding Claims, **characterised in that** the control unit (10) is designed to adapt the actual position of an individual chain link (6) and/or a plurality of chain links (6) with respect to the desired position which the respective chain link (6) should occupy without a detected length variation for one and/or a plurality of chain links (6) in the respective running area of the transport chain (4,4').

15. A method of operating a packaging machine (1), in particular a roller-fed machine or deep-drawing machine, tray-sealing machine or the like, with at least two transport chains 4,4') for transporting a web of material (5), such as a film or the like, and means for applying tension in the transport chain (4,4'), which tension can be predetermined by a control unit (10), wherein the chain length, chain pitch and/or chain tension prevailing in the transport chains (4,4') during operation is detected by sensor means (8,21,25,35),
**characterised in**
**that** the different chain lengths or chain pitches of two transport chains (4,4') are compensated for by stretching and/or relaxing at least one transport chain (4,4').

## Revendications

1. Machine d'emballage (1), en particulier thermoformeuse, operculeuse, avec au moins deux chaînes de transport (4, 4') pour le transport d'une bande de matériau (5) telle qu'un film ou autre, étant précisé qu'il est prévu des moyens formant capteurs (8, 21, 25, 35) pour détecter la longueur et/ou le pas et/ou la tension des chaînes de transport (4, 4'), et qu'il est prévu des moyens (14, 16, 24, 26, 27) pour étirer et/ou détendre au moins une chaîne de transport individuelle (4, 4'), et des moyens de contrôle (10),
**caractérisée en ce que** les moyens (14, 26, 27) pour étirer et/ou détendre et les moyens de contrôle (10) sont conçus pour égaliser des longueurs ou des pas différents de deux chaînes de transport (4, 4') grâce à un étirement et/ou une détende contrôlés d'au moins une chaîne de transport (4, 4').

2. Machine d'emballage selon la revendication 1, **caractérisée en ce qu'**il est prévu une détection continue de la longueur, du pas et/ou de la tension des chaînes de transport (4, 4').

3. Machine d'emballage selon l'une des revendications précédentes, **caractérisée en ce que** la détection de la longueur (9), du pas et/ou de la tension des chaînes est prévue pendant le fonctionnement des chaînes de transport (4, 4').

4. Machine d'emballage selon l'une des revendications précédentes, **caractérisée en ce que** les moyens formant capteurs (21) comprennent un rouleau de prétension (18) pour détecter la longueur, le pas et/ou la tension des chaînes grâce à un changement de position dudit rouleau de prétension (18).

5. Machine d'emballage selon l'une des revendications précédentes, **caractérisée en ce que** l'égalisation de la longueur ou du pas des chaînes n'est prévue qu'à l'intérieur d'un intervalle de tension des chaînes de transport (4, 4').

6. Machine d'emballage selon l'une des revendications précédentes, **caractérisée en ce qu'**il est prévu une unité de contrôle (10) au moins pour un entraînement (14, 26) et/ou un moyen de tension (16, 24, 27) de la chaîne de transport (4, 4').

7. Machine d'emballage selon la revendication 6, **caractérisée en ce que** la chaîne de transport (4, 4') est guidée de telle sorte que les moyens de tension (16, 24, 27) tendent et/ou étirent la chaîne de transport (4, 4') globalement sur toute sa longueur.

8. Machine d'emballage selon la revendication 6 ou 7, **caractérisée en ce que** les moyens de tension (16, 24, 27) et/ou au moins un entraînement de la chaîne de transport (4, 4') tendent et/ou étirent la chaîne de transport (4, 4') dans un tronçon partiel de sa zone de roulement.

9. Machine d'emballage selon l'une des revendications précédentes, **caractérisée en ce qu'**il est prévu un entraînement supplémentaire (26) pour la chaîne de transport (4, 4').

10. Machine d'emballage selon l'une des revendications précédentes, **caractérisée en ce qu'**il est prévu une valeur minimale et/ou une valeur maximale pour la tension de traction dans au moins une chaîne de transport (4, 4').

11. Machine d'emballage selon l'une des revendications précédentes, **caractérisée en ce que** les moyens pour détecter la tension de traction dans la chaîne de transport (4, 4') comprennent un capteur de force et/ou de distance (21, 25).

12. Machine d'emballage selon l'une des revendications précédentes, **caractérisée en ce que** l'unité de contrôle (10) est conçue de manière à contrôler les moyens de tension (27) et/ou au moins un entraînement (14, 26) de la chaîne de transport (4, 4') de telle sorte que la chaîne de transport (4, 4') soit tendue et/ou étirée différemment dans des tronçons partiels individuels de sa zone de roulement.

13. Machine d'emballage selon l'une des revendications précédentes, **caractérisée en ce que** l'unité de contrôle (10) est conçue pour adapter la longueur, le pas et/ou la tension des chaînes en fonction d'une variation de longueur déterminée d'un maillon (6) individuel et/ou de plusieurs maillons (6) dans au moins un tronçon partiel de la zone de roulement de la chaîne de transport (4, 4') pendant le fonctionnement.

14. Machine d'emballage selon l'une des revendications précédentes, **caractérisée en ce que** l'unité de contrôle (10) est conçue pour adapter la position réelle d'un maillon (6) individuel et/ou de plusieurs maillons (6) par rapport à la position théorique que le maillon (6) devrait adopter sans variation de longueur déterminée pour un et/ou plusieurs maillons (6) dans la zone de roulement concernée de la chaîne de transport (4, 4').

15. Procédé pour faire fonctionner une machine d'emballage (1), en particulier une machine à rouleaux, une thermoformeuse, une operculeuse ou autre, avec au moins deux chaînes de transport (4, 4') pour le transport d'une bande de matériau (5) telle qu'un film ou autre, et des moyens pour imprimer dans la chaîne de transport (4, 4') une tension de traction apte à être prédéfinie par une unité de contrôle (10), étant précisé que la longueur, le pas et/ou la tension des chaînes qui prédominent, pendant le transport, dans lesdites chaînes de transport (4, 4') sont détectés par des moyens formant capteurs (8, 21, 25, 35),
**caractérisé en ce que** des longueurs ou des pas différents de deux chaînes de transport (4, 4') sont compensés grâce à un étirement et/ou une détente d'au moins une chaîne de transport (4, 4').
